# EUROPEAN PATENT APPLICATION

(11) **EP 3 903 961 A1**
(43) Date of publication of application: **03.11.2021**
(21) Application number: 20205631.3
(22) Date of filing: 04.11.2020
(51) Int. Cl.: B21F 27/12, B25J 11/00, E04C 5/06, E04C 5/04

(54) **MESH DENSIFICATION AND DIFFERENTIATION**

(30) Priority: 28.04.2020 EP 20171861; 28.04.2020 EP 20171865
(71) Applicant: ETH Zurich, 8092 Zurich (CH)
(72) Inventor: MIRJAN, Ammar, 5415 Nussbaumen (CH); KOH, Mattis, 8004 Zurich (CH); GRAMAZIO, Fabio Matteo, 8005 Zurich (CH); KOHLER, Matthias, 8616 Riedikon (CH)
(74) Representative: Schwarz und Baldus Patentanwälte

(57) **Abstract**

The present invention relates to a method for generating a mesh structure, a processing unit (610A, 610B) for generating the mesh structure, a robot (600A, 600B) for generating the mesh structure, a computer program, and a mesh structure obtained by the method. The method for generating a mesh structure comprises the steps of providing (S310) a first mesh structure, the first mesh structure being a two- or three-dimensional mesh structure; processing (S320) a mesh geometry of the first mesh structure based on an input parameter set to define an operational environment; and generating (S330) a set of robot instructions to apply additional material to the first mesh structure based on the defined operational environment, the additional material being used for modifying the first mesh structure in order to provide a second mesh structure.

## Description

### Technical Field

The present invention relates to the field of building structure fabrication systems and robotic systems for constructing building structures. Specifically, the present invention relates to a method for generating a mesh structure, a processing unit for generating the mesh structure, a robot for generating the mesh structure, a computer program, and a mesh structure obtained by the method.

### Background

Wire structures, like two- and three-dimensional structures, form an integral part of building construction techniques, where such wire structures are used as part of wall structures and can, for example, form part of reinforced concrete structures.

In conventional systems for constructing building structures, robotic systems are usually used, the robotic system comprising at least one robot. A robot may be a robot arm which comprises at least one manipulator and which receives a set of instructions for constructing the building structures.

The manipulator is configured to fabricate or construct sections. Each section may comprise at least one strand, wherein the at least one strand comprises one or more of wire, rod, or band. The at least one strand may be bent into a required shape. The sections are fabricated or constructed by the at least one robot using fabrication instructions which are provided to the at least one robot.

However, in conventional techniques, a crucial part in the field of building constructions is the planning phase, wherein structural analysis or execution of algorithmic calculations by a computer is performed and the requirements which the final three-dimensional structure needs to fulfill are set, based on the results of the structural analysis. In the planning phase, it is decided on the amount of material used for the final three-dimensional structure, the type of material, the spacing of the wire attached to the strand, the spacing of the feed wire, the diameter of the wire, or the like based on the structural analysis and the environment in which the three-dimensional structure will later be installed. Once the planning phase is ended, the final three-dimensional structure is fabricated by fabricating the two-dimensional sections and attaching feed wire to the two-dimensional sections in order to arrive at the final three-dimensional structure. The final three-dimensional structure is, for example, fabricated manually or a set of instructions is sent to at least one robot, wherein the at least one robot fabricates the final three-dimensional structure.

If, after the planning phase has ended and the final three-dimensional structure has been fabricated, the requirements concerning the final three-dimensional structure change due to, for example, unforeseen changes with regard to the building construction or changed environmental settings, the final three-dimensional structure cannot be used anymore. Thus, it may be necessary restarting the planning phase and fabricating a new final three-dimensional structure which will replace the original three-dimensional structure and fulfill the changed requirements. This, however, means that time and/or material is wasted, prolonging and aggravating the overall process of fabricating three-dimensional structures for building constructions.

In addition, it is often necessary to fabricate three-dimensional structures which fulfill various requirements in one structure. For example, one part of the three-dimensional structure needs to be denser than another part of the three-dimensional structure due to static requirements e.g. dependent on a shape of the building curvature, being convex and/or concave. In another case, one part of the three-dimensional structure needs to be made of one type of material, while another part of the three-dimensional structure needs to be made of another type of material. The various requirements may arise from structural analysis, type of concrete used for filling the three-dimensional structure, or the like. For example, concrete with varying granularity may be used in one three-dimensional structure which means that one part of the three-dimensional structure may be denser than another part in order to be able to also hold back concrete with smaller granularity.

However, using the conventional techniques described above, it is difficult fabricating a three-dimensional structure which comprises variable spacing, orientation, and/or wire length, as in the conventional techniques feed wire is only applied globally with a defined spacing, wire length, orientation, etc. By applying feed wire globally, the amount of material used for the final three-dimensional structure may increase significantly in order to be able to fulfill all requirements. For example, by using concrete with smaller and bigger granularity in one three-dimensional structure, a high amount of material may be used for the whole three-dimensional structure for densification to also hold back concrete with smaller granularity. Thus, it may be very difficult fulfilling various and different requirements in one three-dimensional structure while avoiding significant increase of material and complexity.

Thus, improved and more flexible fabrication techniques are required which are capable of considering changing requirements. In addition, improved and more flexible fabrication techniques are required which are capable of saving and reducing material needed for the final three-dimensional structure. Moreover, improved and more flexible fabrication techniques are required for fabricating three-dimensional structures incorporating various location-dependent structural requirements. Thus, it should be possible to apply different fabrication settings locally for one single building structure. So, a first part may be fabricated with a first setting (e.g. a first distance between additional material (e.g. feed wire), e.g. in the form of strands) and a second part may be fabricated with a second setting (e.g. a second distance between additional material (e.g. feed wire)).

### Summary of the Invention

The present invention is defined in the appended independent claims. Further preferred embodiments are defined in the dependent claims.

According to an aspect, a method for generating a mesh structure comprises the steps of providing a first mesh structure, the first mesh structure being a two- or three-dimensional mesh structure; processing a mesh geometry of the first mesh structure based on an input parameter set to define an operational environment; and generating a set of robot instructions to apply additional material to the first mesh structure based on the defined operational environment, the additional material being used for modifying the first mesh structure in order to provide a second mesh structure.

The set of robot instructions may include information how much additional material to be added to the first mesh structure, the location where to add the additional material to the mesh structure, a specific process how to add the additional material, a time constant when to add the additional material, and/or the like. The set of robot instructions may be converted to a format such that a robot or another automatic machining entity can process the set of robot instructions. If more than one robot adds the additional material to the first mesh structure. i.e. if a plurality of robot work together to provide the second mesh structure, each robot may receive a fraction from the set of robot instructions. Then, preferably, the set of robot instructions may comprise an instance identifying segment so that a first fraction of the set of robot instructions is sent to the first robot for execution and the second fraction is sent to the second robot for execution etc.

According to another aspect, a processing unit for generating a mesh structure is configured to use a provided first mesh structure and perform the steps of processing a mesh geometry of the first mesh structure based on an input parameter set to define an operational environment; and generating a set of robot instructions to apply additional material to the first mesh structure based on the defined operational environment, the additional material being used for modifying the first mesh structure in order to provide a second mesh structure.

According to another aspect, a robot for generating a mesh structure comprises the processing unit.

According to another aspect, a computer program comprises instructions which, when the program is executed by a computer, causes the computer to carry out the method for generating a mesh structure.

According to another aspect, a mesh structure is obtainable by the method for generating a mesh structure.

According to a preferred embodiment, the manipulator may be configured to receive operating instructions for adding additional material to a mesh structure. Generally, either a single manipulator fabricates or constructs the sections, or a number of manipulators work together to fabricate or construct the sections for providing the second mesh structure.

According to a preferred embodiment, the first and/or second mesh structure may serve as support member for being filled with concrete of different types and granularity. Thus, no formwork panel is necessary anymore. The second mesh structure may serve as reinforcement element for concrete structures and in addition as support element for preventing the concrete from flowing or falling out of the structure.

A first embodiment relates to modifying the first mesh structure by adding additional material to the same. A second embodiment relates to modifying the first mesh structure may removing or taking away material of the first mesh structure to provide a lighter second mesh structure (lighter or less reinforced than the first mesh structure). The manipulator may receive instructions to remove material (e.g. by welding off).

Further, the method mentioned above may be used recursively. In particular, the method may already be used for providing the first mesh structure. So, for example, by processing the operational environment and/or the mesh geometry, a modified first mesh structure may be provided, which is less reinforced due to the operational environmental data, like a (lesser) curvature of the structure and less requirements which need to be fulfilled, like force flow of the second mesh structure, an orientation of the second mesh structure, and/or a set of thresholds regarding an amount of material being used for the second mesh structure. So, e.g. the method may already be used to provide a modified first mesh structure, so that material consumption could be minimized from beginning on and there is no need to take away additional material.

The fist and/or second mesh structure may be an area and/or surface reinforcement and/or may be used as reinforcement support structures.

### Brief Description of the Figures

Embodiments of the present invention, which are presented for better understanding the invention concepts and which are not to be seen as limiting the invention, will now be described with reference to the Figures in which:
Figure 1 shows an example of a plurality of sections, wherein each section comprises a strand and a wire.
Figure 2 shows an example how a manipulator is attaching feed wire to a plurality of two-dimensional sections to arrive at a three-dimensional structure.
Figure 3 shows a flowchart of a method for generating a mesh structure according to an embodiment.
Figure 4 shows a flowchart of a method for generating a mesh structure according to another embodiment.
Figure 5 shows an example of how additional material is applied to a first mesh structure using a robotic system.
Figure 6A shows a robot for generating the mesh structure according to an embodiment.
Figure 6B shows a robot for generating the mesh structure according to another embodiment.
Figure 7 shows a robotic system for generating a mesh structure according to an embodiment.

### Detailed Description

The mechanism(s) described above or in more detail below solve technical problems that arise with regard to conventional fabrication techniques. As described above, conventional fabrication techniques are highly inflexible and can only factor requirements into the fabrication of a final three-dimensional structure for building constructions when the requirements are known from the beginning, i.e. during an initial planning phase. However, newly introduced or changed requirements concerning the final three-dimensional structure due to, for example, unforeseen changes with regard to the building construction after the initial planning phase, cannot be considered anymore by conventional fabrication techniques resulting in a final three-dimensional structure not satisfying necessary requirements. This results in a waste of material and time, because a new three-dimensional structure needs to be planned and fabricated, wherein the other three-dimensional structure not satisfying the necessary requirements may need to be disassembled and/or discarded.

For example, during an initial planning phase, it is planned to fill the final three-dimensional structure with a concrete having a specific granularity and/or a specific consistency. However, after having planned and fabricated the final three-dimensional structure in view of the concrete having the specific granularity and/or specific consistency, it may be necessary to fill the final three-dimensional structure with another type of concrete having another granularity and/or consistency characteristics. If, for example, a concrete with smaller granularity is now used instead of the concrete which was considered during the initial planning phase, the final three-dimensional structure may have larger spacing, resulting in that the concrete with the smaller granularity flowing or falling through the final three-dimensional structure. Thus, in order to achieve a final three-dimensional structure capable of holding back the concrete with the smaller granularity, it may be necessary fabricating a new final three-dimensional structure with smaller spacing, the new final three-dimensional structure fulfilling the requirements with regard to the concrete with smaller granularity.

So, densification according to the suggestion presented herein, can also make sense in terms of the geometry of the structure regarding the filling. An overhanging structure might need a denser mesh on one side, to prevent loss of concrete during filling, whereas on the other side, it can have the minimal, structural relevant, reinforcement.

In addition, using the conventional techniques described above, it is difficult fabricating a final three-dimensional structure which comprises variable spacing, orientation, and/or wire length, as in the conventional techniques feed wires are only applied globally with a defined spacing, wire length, orientation, etc.

For example, it may be necessary filling the final three-dimensional structure with different types of concrete, for example, filling the final three-dimensional structure with concrete of bigger and smaller granularity. If a defined spacing is globally applied to the final three-dimensional structure as in state of the art systems, concrete with smaller granularity may flow or fall through the final three-dimensional structure when the spacing is defined in view of the concrete with bigger granularity.

If, on the other side, the spacing of the final three-dimensional structure is defined with regard to the concrete with smaller granularity, both the concrete with smaller and bigger granularity may be hold back by the final three-dimensional structure. However, the amount of material used for the final three-dimensional structure increases, as the whole three-dimensional structure is densified.

Thus, in order to be able to decrease the amount of material for the final three-dimensional structure while avoiding concrete flowing or falling through the final three-dimensional structure due to improper spacing, it may be necessary providing an optimized technique which ensures variable spacing throughout the final three-dimensional structure, wherein smaller spacing is used at positions where concrete with smaller granularity occurs and bigger spacing is used at positions where concrete with bigger granularity occurs.

Thus, methods and systems are described below which result in improved and more flexible fabrication techniques. These methods and systems are capable of considering new requirements which could not have been foreseen, for example, during an initial planning phase and are capable of saving material needed for the final three-dimensional structure. In addition, an improved and optimized final three-dimensional structure is achieved which is able to incorporate various location-dependent structural requirements.

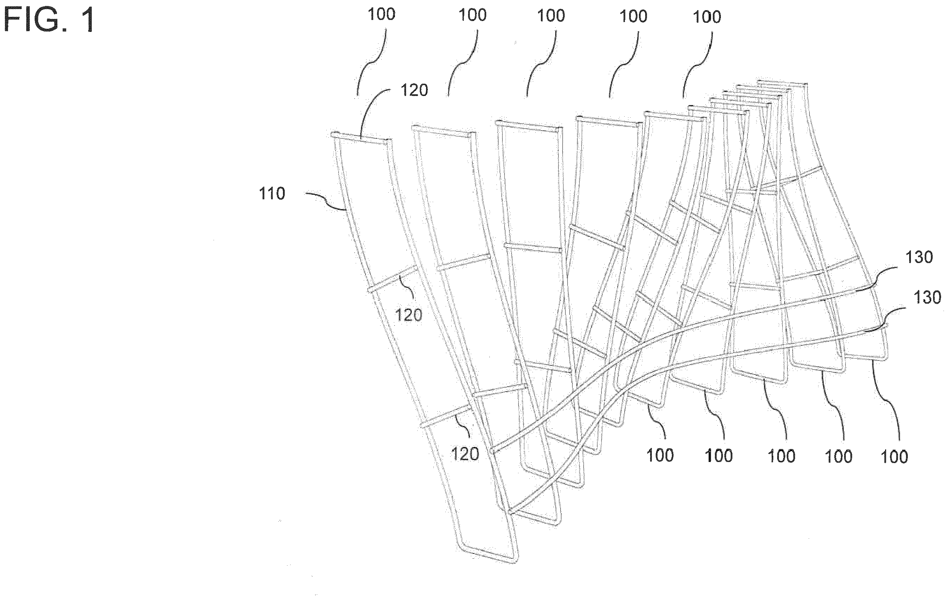

**Figure 1** shows an example of a plurality of sections 100, wherein each section 100 comprises one strand 110 which is bent at one end to achieve a u-shape. Each section 100 additionally comprises wire 120 which is added to the strand for reasons of structural rigidity.

Each section 100 may be a two-dimensional structure. In order to use these sections 100 for building constructions, the sections 100 often need to be combined to be used, for example, as part of reinforced concrete structures or as part of wall structures. Thus, in order to arrive at three-dimensional structures in the field of building structure constructions, the sections 100 may be positioned relative to one another to form an outline of a final structure, as also shown in Figure 1, and may be linked using, for example, feed wire 130. The feed wire 130 may be aligned to the sections 100 by the manipulator through, for example, bending of the feed wire 130 by the manipulator and attaching to the strands 110 of the sections 100. For attaching the feed wire 130 to the strands 110 of the sections 100, contact welding may be used. However, also any other attachment techniques may be used.

A set of instructions, for example, computational instructions, may be used to generate assembly information that defines, for example, intersection points where to attach the feed wire 130 to the sections 100. The attachment can be carried out by the manipulator fully automatically. In a validation step of another preferred embodiment, the set of instructions may be validated by a user signal, to be provided on e.g. a user interface and provided to a computer program. Thus, the set of instructions in only provided to the manipulator for execution in case a validation signal is received. In this manner, a final three-dimensional structure is fabricated which may be used for building constructions. The fabrication of the final structure can be carried out in-situ or the final structure can be placed or erected on a construction site at a correct location. Then, the final structure may be filled with concrete.

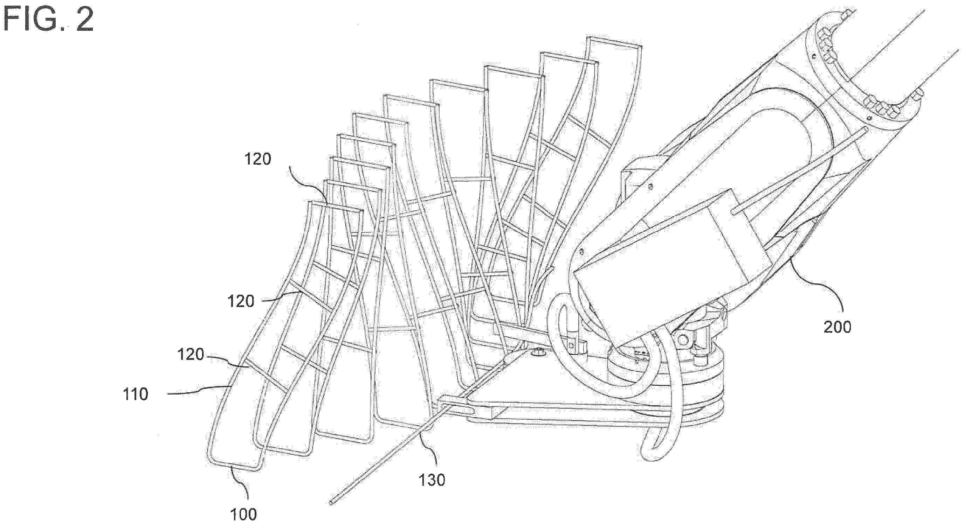

**Figure 2** shows an example how a manipulator is bending and attaching feed wire to a plurality of two-dimensional sections to arrive at a three-dimensional structure. Figure 2 shows a similar scenario as Figure 1, wherein a plurality of two-dimensional sections 100 is aligned and a manipulator 200 as part of a robot arm attaches feed wire 130 to the plurality of two-dimensional sections 100 in order to arrive at a three-dimensional structure. Each section 100 again comprises a strand 110 and a plurality of wire 120 and can be bent or curved to fulfill construction requirements. The sections 100 may be positioned and attached in a specific way to arrive at a desired three-dimensional final structure which may be needed for building constructions. Again, the three-dimensional final structure may be filled with concrete.

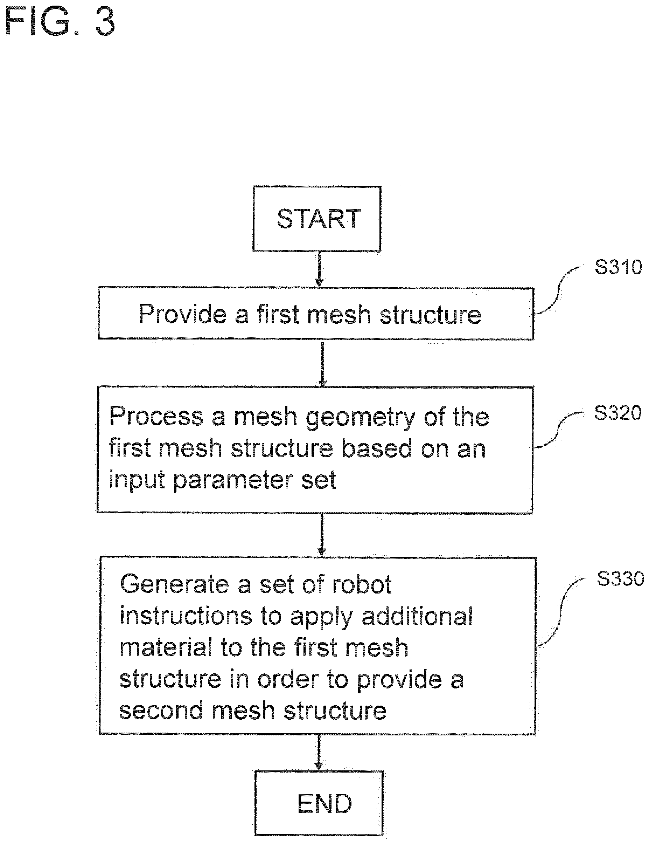

**Figure 3** shows a flowchart of a method for generating a mesh structure according to an embodiment. The mesh structure may be a first mesh structure or a second mesh structure. In particular, the mesh structure may be the second mesh structure, the second mesh structure being, for example, a final three-dimensional structure used for building constructions. For example, such second mesh structure is used as part of wall structures and can, for example, form part of reinforced concrete structures. The first mesh structure and the second mesh structure may be a wire structure which can be filled with concrete. The first mesh structure and the second mesh structure may be made out of metal, steel, carbon fiber, bamboo, timber, or the like. At least a part of the method may be a computer-implemented method, in particular the steps S320 and S330.

As shown in Figure 3, the method of generating the mesh structure comprises providing a first mesh structure in step S310, the first mesh structure being a two- or three-dimensional mesh structure. The first mesh structure may be a primary wire structure, the primary wire structure being a three-dimensional structure as shown, for example, with regard to Figures 1 and 2. The first mesh structure may comprise a plurality of sections, each having at least one strand and at least one wire, wherein the plurality of sections may be attached by, for example, a manipulator of a robot arm using a feed wire. The first mesh structure may have any topology and may be constructed in view of structural analysis or the like.

The step of providing the first mesh structure may comprise providing a pre-constructed mesh structure as the first mesh structure. For example, a pre-constructed mesh structure may be mesh structure constructed manually or constructed by a robotic system or by any other fabrication system before performing the method as shown in Figure 3.

According to another embodiment, the step of providing the first mesh structure may comprise constructing an initial mesh structure and providing the constructed initial mesh structure as the first mesh structure. For example, in order to construct the initial mesh structure, a set of instructions for constructing the initial mesh structure are received and executed. The set of instructions may be received from an external device, for example, a cloud-based server, or an external computer using a wired or wireless network or may be input manually. The initial mesh structure may be constructed as illustrated in Figures 1 and 2.

The method further comprises in step S320 processing a mesh geometry of the first mesh structure based on an input parameter set to define an operational environment and in step S330 generating a set of robot instructions to apply additional material to the first mesh structure based on the defined operational environment.

Generally, the additional material may be used to modify the first mesh structure in order to provide a second mesh structure. Modifying, according to a first embodiment may comprise adding material and thus a densification of the first mesh structure. In a second embodiment, the step of modifying may comprise removing material form the first mesh structure to provide a lighter second mesh structure with less material. In this case, modifying may be performed by taking away material form the first mesh structure or by not adding additional material.

The set of robot instructions may be in any form or version that can be read and processed by a robotic system, in particular by a processing unit included in a robot or manipulator of a robot.

The second mesh structure may be the first mesh structure with modifications, for example, with more material than the first mesh structure for densification reasons. For example, more feed wire is added to the first mesh structure or more wire is added to the strands. The feed wire and/or the wire for the strands may be of variable diameter, variable length, different material than the material of the first mesh structure, or the like. The additional material may be applied to the first mesh structure in a horizontal and/or vertical direction.

However, according to another embodiment, the second mesh structure may be a mesh structure with less material than the first mesh structure by, for example, removing material from the first mesh structure instead of adding material to the first mesh structure. The material to be removed may be, for example, feed wire used for attaching two-dimensional sections, the attached two-dimensional sections forming the first mesh structure, or wire attached to the strands. In addition, it may be able to remove whole sections from the first mesh structure, the first mesh structure comprising a plurality of sections.

As explained above, the mesh geometry of the first mesh structure may be processed. For example, the mesh geometry may indicate a geometrical form of the first mesh structure, a number of nodes, for example grid nodes, and connections used in the first mesh structure, or a topology of the first mesh structure. In other words, the mesh geometry may describe the composition of the first mesh structure. By processing the mesh geometry of the first mesh structure, it is possible to analyze the composition and structure of the first mesh structure to be able to decide on additional material being used for modifying the first mesh structure.

In order to generate the set of robot instructions to apply the additional material to the first mesh structure by using, for example, a robotic system, the mesh geometry of the first mesh structure is processed based on an input parameter set in order to define the operational environment. The input parameter set may be directed to the characteristic of the second mesh structure to be provided. In other words, the input parameter set may indicate necessary requirements that the characteristics of the second mesh structure need to fulfill. For example, the input parameter set indicates a structural analysis with regard to the second mesh structure, a force flow of the second mesh structure, an orientation of the second mesh structure, and/or a set of thresholds regarding an amount of material being used for the second mesh structure. The structural analysis may be the determination of effects of loads on physical structures and their components.

For example, if the second mesh structure should be used as reinforcement structure for a ceiling of a building construction, the input parameter set may indicate a load that the second mesh structure needs to support. Thus, the input parameter set may indicate the desired or final characteristics that the second mesh structure needs to have. Some or all characteristics may already exist for the first mesh structure or may only be obtained by modifying the first mesh structure to arrive at the second mesh structure.

The set of thresholds regarding an amount of material being used for the second mesh structure may indicate how much material can be used in total for the second mesh structure. In other words, the threshold may indicate a maximum amount of material that can be used for the second mesh structure. By setting the set of thresholds regarding an amount of material, an excess amount of material that is used for constructing the second mesh structure can be avoided. Thus, the weight of the second mesh structure can also be regulated.

The operational environment may indicate settings and characteristics with regard to the additional material to be added to the first mesh structure. For example, the operational environment defines an amount of additional material to be added to the first mesh struct, a type of material to be used as the additional material, spatial information indicating a spatial position where to add the additional material to the first mesh structure to provide the second mesh structure, and/or type of connection. The type of connection may indicate how the additional material should be connected or attached to the first mesh structure. For example, the additional material can be connected or attached to the first mesh structure using contact welding. However, any other forms of attachment are possible.

According to another embodiment, the amount of additional material to be added to the mesh structure, the type of material to be used as the additional material, and/or the type of connection depend on a position where the additional material is to be added to the first mesh structure. By having the parameters of the amount of additional material, the type of material, and/or the type of connection to be location-dependent, an improved and optimized second mesh structure, i.e. an improved and optimized final three-dimensional structure, is achieved which is able to incorporate various location-dependent structural requirements. Thus, a second mesh structure is constructed which can be, for example, filled with various types of concrete having, for example, different granularities, or which can, for example, fulfill various structural analysis requirements without an unnecessary increase of material or increase in complexity.

In other words, the input parameter set may be used to set requirements for the second mesh structure, wherein the operational environment then defines the settings and characteristic with regard to the additional material in order to fulfill the requirements for the second mesh structure. For example, if the second mesh structure needs to fulfill the requirements to be light-weighted while carrying a specific load, the input parameter set reflects these requirements of the second mesh structure and the operational environment defines the additional material with regard to these requirements. Based on the defined operational environment, a set of robot instructions can be generated to apply additional material to the first mesh structure, wherein the additional material is used for modifying the first mesh structure in order to provide the second mesh structure. By attaching additional material, it is, for example, possible to densify the first mesh structure according to specific requirements.

However, as also indicated above, it is also possible to provide a set of robot instructions to remove material from the first mesh structure to arrive at a second mesh structure having less material than the first mesh structure.

Thus, a method for generating an improved and optimized mesh structure is provided, wherein the flexibility with regard to fabrication techniques for mesh structures is increased. By using the above described method, it is possible to quickly and efficiently react to requirement changes with regard to mesh structures used, for example, in building constructions.

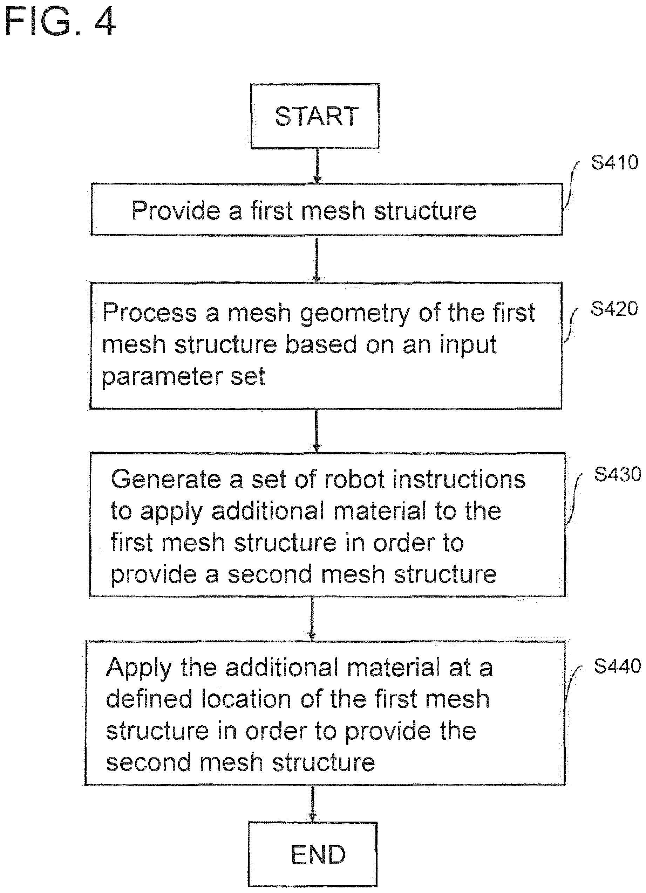

**Figure 4** shows a flowchart of a method for generating a mesh structure according to another embodiment. The steps S410, S420, and S430 shown in Figure 4 are equal to the steps S310, S320, and S330 explained with regard to Figure 3. Thus, a detailed description of steps S410, S420, and S430 is omitted at this point for conciseness reasons and it is referred to the description above that is given with regard to Figure 3.

The method shown in Figure 4 further comprises in step S 440 applying the additional material at a defined location of the first mesh structure based on the set of robot instructions using a robotic system in order to provide the second mesh structure. The set of robot instructions is generated using, for example, the above described method for generating the mesh structure. For example, if a part of the first mesh structure needs to be densified, additional material is applied to this part of the first mesh structure while keeping the other parts of the first mesh structure unchanged. Thus, a second mesh structure is obtained which comprises a more densified part compared to the remaining parts.

According to an embodiment, applying the additional material may be performed iteratively in order to provide the second mesh structure. For example, the set of robot instructions comprises a time variable indicating when to apply the additional material. Thus, when the set of robot instructions is, for example, performed by a robotic system, the robotic system may apply, for example, different amount of material at a specific location of the first mesh structure and/or different type of material at a specific location of the first mesh structure depending on the time variable. Thus, it is possible providing a second mesh structure fulfilling various requirements due to location-dependent and/or time-dependent application of the additional material.

In addition, by iteratively applying the additional material, it may be possible first applying additional material onto the first mesh structure to provide a mesh structure with constant spacing, i.e. an intermediate mesh structure. Then it may be possible applying additional material on top of the intermediate mesh structure to arrive at a second mesh structure with variable spacing, orientation and/or wire length. Instead of applying additional material on top of the intermediate mesh structure, it may also be possible applying material in the spacings of the intermediate mesh structure, resulting in additional material being applied on top of the first mesh structure being present in the spacing of the intermediate mesh structure. Thus, it is possible creating a two-step, three-step, or even n-step process for creating the second mesh structure depending on the number of iterations n.

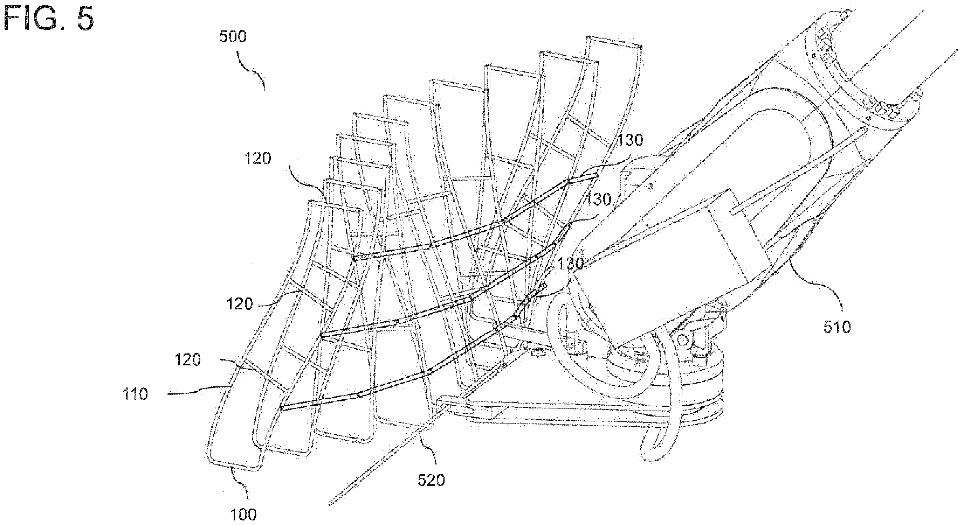

**Figure 5** shows an example of how additional material is applied to a first mesh structure using a robotic system.

In Figure 5, a first mesh structure 500 is shown, wherein the first mesh structure comprises a plurality of sections 100. The sections 100 are similar to the sections shown in Figures 1 and 2, wherein each section 100 comprises a strand 110 and wire 120. Furthermore, the sections 100 are attached with feed wire 130 to form the first mesh structure 500. The first mesh structure 500 is a three-dimensional mesh structure, like a three-dimensional wire mesh structure. For a detailed description of the sections 100, the strand 110, the wire 120, and the feed wire 130, it is referred to Figures 1 and 2.

Figure 5 further shows a robot arm comprising a manipulator 510. The manipulator 510 may be used to apply additional material to the first mesh structure to modify the first mesh structure, i.e. to provide a second mesh structure. For example, the additional material is applied to the first mesh structure to densify a specific location of the first mesh structure. However, the manipulator 510 may be also used to remove material from the first mesh structure to arrive at a modified first mesh structure, i.e. a second mesh structure.

As shown in Figure 5, the manipulator 510 is in the process of applying additional material 520 to the first mesh structure 500 to arrive at a second mesh structure. Here, the additional material 520 may be, for example, used to densify or differentiate parts of the first mesh structure 500.

Thus, by applying additional material 520 to the first mesh structure 500, the first mesh structure 500 can be easily and efficiently adapted to changing requirements in order to provide a mesh structure that is optimized for a specific use case. For example, a standard mesh structure can be provided as the first mesh structure 500 which is modified to fulfill all requirements with regard to a final mesh structure. The final mesh structure can then form an integral part of building constructions, for example, as part of wall structures or reinforced concrete structures.

In addition, by locally applying the additional material at specific locations of the first mesh structure 500, a complex mesh structure can be easily fabricated in order to fulfill different requirements, for example, location-dependent requirements. For example, it is often necessary that a mesh structure is denser at radii or overhangs.

According to an embodiment, applying the additional material at a defined location of the first mesh structure as described above may comprise gravity-based application of the additional material, spraying the additional material, applying the additional material on top of the first mesh structure, and/or attaching a tailored patch to the first mesh structure. The tailored patch may represent the additional material.

For example, as shown in Figure 5, wire as additional material may be applied on top of the first mesh structure, wherein the wire may be attached to the first mesh structure using contact welding. However, any other technique for attaching the wire to the first mesh structure may be used.

Generally, the wire may comprise a single piece of wire which is attached to the first mesh structure or may be a plurality of small pieces of wire which are attached sequentially or simultaneously to the first mesh structure. The wire may be, for example, metal, steel, carbon fiber, bamboo, timber, or the like.

However, for specific applications and building requirements, it is beneficial that the additional material may be also applied in other ways which are not shown in Figure 5. For example, the additional material is fiber that can be sprayed and thus the additional material is sprayed on a specific location of the first mesh structure. Spraying the additional material may be an easy and non-complicated procedure for modifying the first mesh structure.

According to another embodiment, it is possible constructing tailored mesh patches, like chicken wire, wherein the tailored mesh patches are attached to the first mesh structure. Thus, it is possible modifying large areas of the first mesh structure at once to accelerate the process of producing the second mesh structure. In addition, the tailored mesh patches can be prepared beforehand and can be quickly and easily applied to the first mesh structure.

According to another embodiment, gravity-based application of the additional material may be used for modifying the first mesh structure. Gravity-based application of the additional material may comprise guiding a flexible material over the first mesh structure to provide the second mesh structure. The flexible material may be, for example, string soaked epoxy, thermoplastic material, or the like that cures on the first mesh structure to provide the second mesh structure. In other words, a flexible material is guided over the first mesh structure and, due to gravity, drops or sets on specific locations of the first mesh structure where the flexible material cures, resulting in a second mesh structure.

As explained above, a method may be performed for generating an optimized mesh structure, the optimized mesh structure fulfilling various requirements and being, for example, the above described second mesh structure. Some or all steps of the method for generating the mesh structure may be performed by a processing unit or processing circuitry. The operations described above with regard to the method for generating a mesh structure may be performed in response to the processing circuitry or processor executing software instructions contained in a computer-readable medium, such as the main memory, ROM and/or storage device. A computer-readable medium may be defined as a physical or a logical memory device. For example, a logical memory device may include memories within a single physical memory device or distributed across multiple physical memory devices. Each of the main memory, ROM and storage device may include computer-readable media with instructions as program code. The software instructions may be read into the main memory for another computer-readable medium, such as a storage device or from another device via the communication interface.

Further, the software instructions contained in the main memory may cause processing circuitry including a data processor, when executed on processing circuity, to cause the data processor to perform operations or processes described herein. Alternatively, hard-wired circuitry may be used in place or on in combination with the software instructions to implement processes and/or operations described herein. Thus, implementations described herein are not limited to any specific combination of hardware and software.

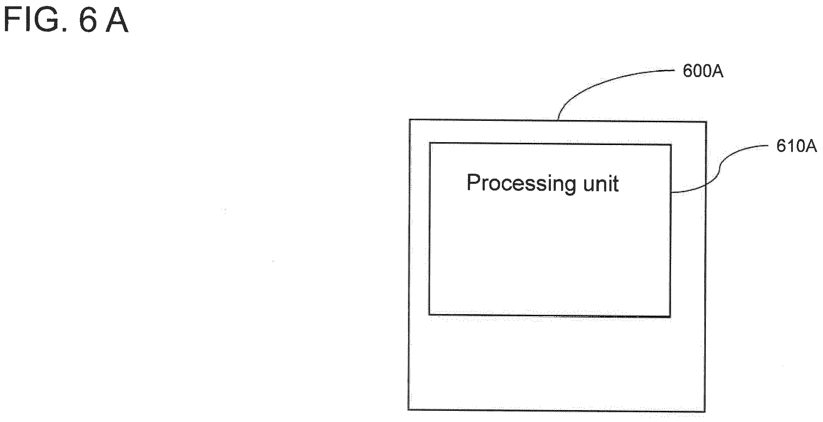

**Figure 6A** shows a robot 600A for generating the mesh structure according to an embodiment. The robot 600A may comprise a processing unit 610A, the processing unit 610A configured to use a provided first mesh structure and perform the method for generating the second mesh structure as explained above. For example, the processing unit 610A may be provided in a robot arm of the robot 600A or in another part of the robot 600A. The robot 600A may further comprise a storing unit (not shown) which may store the method for generating the second mesh structure. The processing unit 610A may perform the steps of the method stored in the storing unit in order to provide the second mesh structure. The robot 600A may execute the set of robot instructions generated by the method performed by the processing unit 610A in order to apply the additional material to the first mesh structure.

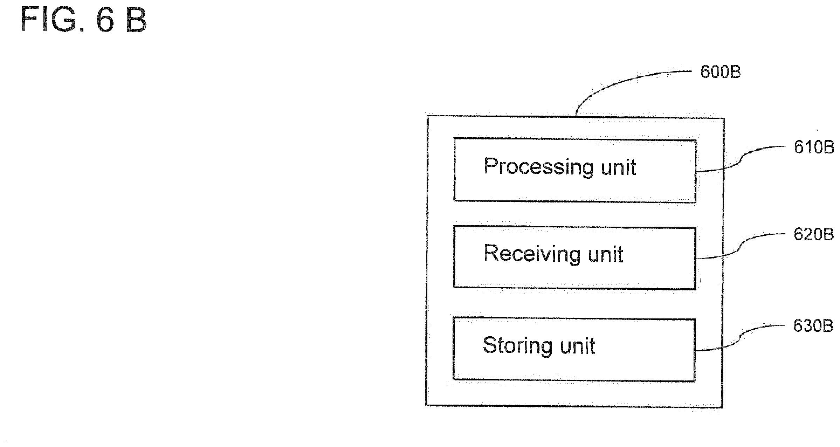

**Figure 6B** shows a robot 600B for generating the mesh structure according to another embodiment. The robot 600B may comprise a processing unit 610B, a receiving unit 620B, and a storing unit 630B. The method for generating the second mesh structure may, in this embodiment, not be performed by the processing unit 610B but by a processing unit of, for example, an external device, server, or computer (not shown). The generated set of robot instructions may be transmitted to the robot 600B, wherein the receiving unit 620B of the robot 600B may receive the generated set of robot instructions. The set of robot instructions may be stored in the storing unit 630B and may be executed by the processing unit 610B of the robot 600B. As an external device or computer generates the set of instructions, and the robot 600B only executes the generated set of instructions, less processing power is needed in the robot 600B and the structure and functionality of the robot 600B can be simplified.

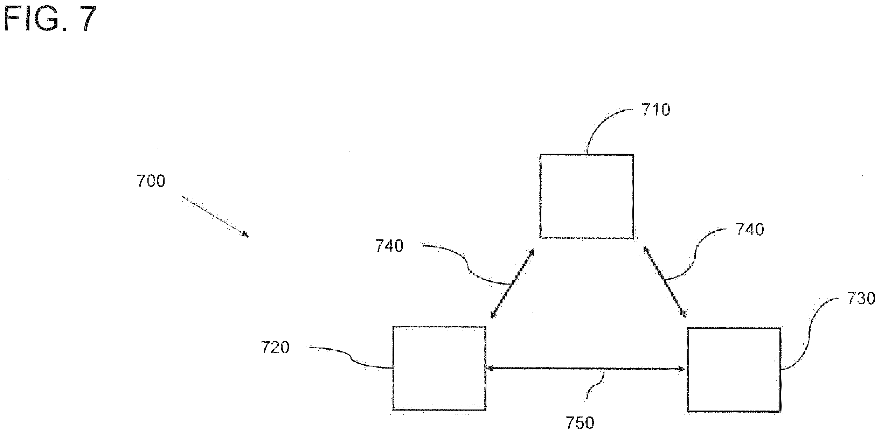

**Figure 7** shows a robotic system for generating a mesh structure according to an embodiment. The robotic system 700 comprises an external device 710, a robot 720, and a robot 730. The robotic system 700 in Figure 7 only comprises one external device 710 and two robots 720 and 730. However, this is not limiting and the robotic system 700 may comprise more or less external devices and robots.

The external device 710 may be an external computer or external server which is capable of performing the method for generating a mesh structure as described in detail above. The robots 720 and 730 may be robots as described with regard to Figures 6A and 6B. The robots 720 and 730 may be connected wirelessly or with wires to the external device 710 via links 740 for communication. The communication between the robots 720, 730 and the external device 710 may be bidirectional or unidirectional. For example, the robots 720 and 730 may be connected to the external device 710 by means of employing an intermediate-range wireless network (e.g. WLAN, GSM, GPRS, UMTS, 3GPP, LTE, or similar technologies), or a short-range wireless network (e.g. IrDA, IEEE802.5.4, Zigbee, RF4CE, IEEE802.11, Bluetooth, or similar technologies). The external device 710 may communicate with the robots 720 and 730 using Device-to-Device (D2D) communication.

In addition, the robot 720 may be connected wirelessly or with wires to the robot 730 via link 750 for communication. The communication between the robots 720 and 730 may be bidirectional or unidirectional. For example, the robot 720 may be connected to the robot 730 by means of employing an intermediate-range wireless network (e.g. WLAN, GSM, GPRS, UMTS, 3GPP, LTE, or similar technologies), or a short-range wireless network (e.g. IrDA, IEEE802.5.4, Zigbee, RF4CE, IEEE802.11, Bluetooth, or similar technologies). The robot 720 may communicate with the robot 730 using Device-to-Device (D2D) communication.

If the robots 720 and 730 are robots according to Figure 6B, the robots 720 and 730 may receive a generate set of robot instructions from the external device 710 over links 740. It may also be possible that the external device 710 uses a Cloud system (not shown), wherein the robots 720 and 730 are able to obtain the generated set of robot instructions from the Cloud system. If, for example, the external device 710 stores the generated set of robot instructions in a Cloud system, the robots 720 and 730 may access the Cloud system to retrieve the set of robot instructions and generate the mesh structure according to the set of robot instructions. The robots 720 and 730 do not have to be provided at a same construction site and can also be provided at different construction sites.

According to another embodiment, the robots 720 and 730 may be able to communicate with each other as described above. Thus, it is possible that only one robot from the robots 720 and 730 generates a set of instructions or receives a generated set of instructions from the external device 710, wherein the one robot transmits or forwards the set of instructions to the other robot.

The external device 710 may transmitting the generated set of robot instructions to at least one robot 720 and 730, the at least one robot 720 and 730 using the transmitted set of robot instructions to provide the second mesh structure. If the generated set of robot instructions is transmitted to at least two robots, here to both robots 720 and 730, the at least two robots work in parallel to provide the second mesh structure. In other words, the robots 720 and 730 may work together to provide the second mesh structure. By dividing the labor, the second mesh structure can be provided in a faster way. In addition, by dividing the labor, the robots 720 and 730 can be specialized to perform different tasks, thus simplifying the structures and functionalities of the robots 720 and 730.

According to another embodiment, the robots 720 and 730 may communicate with each other to exchange information or data. For example, if the robots 720 and 730 work together to provide the second mesh structure, the robots 720 and 730 may exchange information to indicate to the other robot which steps are currently performed. Thus, the robots 720 and 730 are able to exchange information regarding the current stage of the fabrication process to enable improved collaboration between the two robots 720 and 730.

According to another embodiment, the generated set of robot instructions may comprise a time constant, the time constant indicating a time when the at least one robot starts processing the transmitted set of robot instructions to provide the second mesh structure. For example, in Figure 7, the time constant indicates the time when robots 720 and 730 start processing the transmitted set of robot instructions to provide the second mesh structure. By providing the time constant, an order may be defined when each of the robots 720 and 730 perform what kind of process to generate the second mesh structure. The time constant may either indicate a time when the at least one robot starts processing all robot instructions of the set of robot instructions or may indicate a time when each robot instruction from the set of robot instructions is processed. In other words, an order of processing a plurality of robot instructions is defined.

It will be apparent to those skilled in the art that various modifications and variations can be made in the entities and methods of this invention as well as in the construction of this invention without departing from the scope or spirit of the invention.

The invention has been described in relation to particular embodiments and examples which are intended in all aspects to be illustrative rather than restrictive. Those skilled in the art will appreciate that many different combinations of hardware, software and/or firmware will be suitable for practicing the present invention.

Moreover, other implementations of the invention will be apparent to those skilled in the art from consideration of the specification and practice of the invention disclosed herein. It is intended that the specification and the examples be considered as exemplary only. To this end, it is to be understood that inventive aspects lie in less than all features of a single foregoing disclosed implementation or configuration. Thus, the true scope and spirit of the invention is indicated by the following claims.

## Claims

1. A method for generating a mesh structure, comprising the steps of:
- providing (S310) a first mesh structure, the first mesh structure being a two- or three-dimensional mesh structure;
- processing (S320) a mesh geometry of the first mesh structure based on an input parameter set to define an operational environment; and
- generating (S330) a set of robot instructions to apply additional material to the first mesh structure based on the defined operational environment, the additional material being used for modifying the first mesh structure in order to provide a second mesh structure.

2. The method according to claim 1, further comprising:
applying (S440) the additional material at a defined location of the first mesh structure based on the set of robot instructions using a robotic system in order to provide the second mesh structure.

3. The method according to claim 1 or 2, wherein
applying (S440) the additional material is performed iteratively in order to provide the second mesh structure.

4. The method according to any one of claims 1 to 3, wherein
providing (S310, S410) the first mesh structure comprises providing a pre-constructed mesh structure as the first mesh structure.

5. The method according to any one of claims 1 to 4, wherein providing (S310, S410) the first mesh structure comprises constructing an initial mesh structure and providing the constructed initial mesh structure as the first mesh structure.

6. The method according to any one of claims 1 to 5, wherein the input parameter set is directed to a characteristic of the second mesh structure to be provided.

7. The method according to claim 6, wherein the input parameter set indicates a structural analysis with regard to the second mesh structure, a force flow of the second mesh structure, an orientation of the second mesh structure, and/or a set of thresholds regarding an amount of material being used for the second mesh structure.

8. The method according to any one of claims 1 to 7, wherein the operational environment defines an amount of the additional material to be added to the first mesh structure, a type of material to be used as the additional material, spatial information indicating a spatial position where to add the additional material to the first mesh structure to provide the second mesh structure, and/or type of connection.

9. The method according to claim 8, wherein the amount of the additional material to be added to the mesh structure, the type of material to be used as the additional material, and/or the type of connection are position dependent and in particular depend on a position where the additional material is to be added to the first mesh structure.

10. The method according to any one of claims 2 to 9, wherein applying (S440) the additional material at the defined location of the first mesh structure comprises gravity-based application of the additional material, spraying the additional material, applying the additional material on top of the first mesh structure, and/or attaching a tailored patch to the first mesh structure, the tailored patch representing the additional material.

11. The method according to claim 10, wherein the gravity-based application of the additional material comprises guiding a flexible material over the first mesh structure to provide the second mesh structure.

12. The method according to any one of claims 1 to 11, further comprising:
- transmitting the generated set of robot instructions to at least one robot (600A, 600B, 720, 730), the at least one robot (600A, 600B, 720, 730) using the transmitted set of robot instructions to provide the second mesh structure.

13. The method according to claim 12, wherein if the generated set of robot instructions is transmitted to at least two robots (600A, 600B, 720, 730), the at least two robots (600A, 600B, 720, 730) work in parallel to provide the second mesh structure.

14. The method according to claim 12 or 13, wherein the generated set of robot instructions comprises a time constant, the time constant indicating a time when the at least one robot (600A, 600B, 720, 730) starts processing the transmitted set of robot instructions to provide the second mesh structure.

15. A processing unit (610A, 610B) for generating a mesh structure, the processing unit (610A, 610B) configured to use a provided first mesh structure and to perform the steps of:
- processing a mesh geometry of the first mesh structure based on an input parameter set to define an operational environment; and
- generating a set of robot instructions to apply additional material to the first mesh structure based on the defined operational environment, the additional material being used for modifying the first mesh structure in order to provide a second mesh structure.

16. A robot (600A, 600B) for generating a mesh structure, comprising the processing unit (610A, 610B) according to claim 15.

17. A computer program comprising instructions which, when the program is executed by a computer, causes the computer to carry out the method according to any one of claims 1 to 14.

18. A mesh structure obtainable by the method according to any one of claims 1 to 14.
